# EUROPEAN PATENT APPLICATION

(11) **EP 4 815 337 A1**
(43) Date of publication of application: **30.09.2026**
(21) Application number: 25315098.1
(22) Date of filing: 25.03.2025
(51) Int. Cl.: H04B 10/079

(54) **DETECTION OF ANOMALOUS EVENTS IN OPTICAL NETWORKS**

(71) Applicant: Nokia Networks France, 91300 Massy (FR); Nokia Solutions and Networks Oy, 02610 Espoo (FI)
(72) Inventor: Ramantanis, Petros, 92160 ANTONY (FR); Boitier, Fabien, 91300 MASSY (FR); Bigo, Sébastien, 91300 MASSY (FR); Lonardi, Matteo, 37069 VILLAFRANCA DI VERONA (IT); Bellotti, Giovanni, 43125 PARMA (IT); Vercelli, Eliana, 20138 MILAN (IT); Delezoide, Camille, 78950 GAMBAIS (FR)
(74) Representative: Innovincia

(57) **Abstract**

A system for detecting events in an optical network is configured to detect coincident drops in quality of transmission (QoT) on a plurality of wavelength channels received at one or more nodes of the optical network. The system is further configured to determine a QoT drop function based on the detected coincident drops in QoT. The QoT drop function indicates a change in a QoT metric corresponding to a respective drop in QoT as a function of optical frequency. The system is further configured to detect a signature of a network event in the QoT drop function.

## Description

### TECHNICAL FIELD

The present disclosure generally relates to optical networks, and more particularly relates to event monitoring in optical networks.

### BACKGROUND

Fiber-optic communication systems, such as terrestrial and undersea optical fiber links, may be continually monitored to detect, and locate, various faults in the system that may deleteriously affect transmission of optical signals. One type of anomalous phenomenon that has been observed in optical networks is unexpected, short-lived performance degradation, after which normal operation is restored without any external intervention. Such soft failures present an important challenge for network operators since they may impact available margins and, in some cases, may affect system availability, e.g., when a lightpath bit error rate (BER) temporarily rises above a threshold that is correctable by the forward error correction (FEC) used in transmission. Determining likely causes and/or location of such events is of importance for system operators.

### SUMMARY

An aspect of the present disclosure relates to a method for monitoring an optical fiber network. The method comprises detecting coincident drops in quality of transmission (QoT) on a plurality of wavelength channels received at one or more nodes of the optical network and determining a QoT drop function, the QoT drop function indicating for each of the plurality of wavelength channels a change in a QoT metric corresponding to a respective drop in QoT among the detected coincident drops in QoT. The method further comprises detecting a signature of a network event in the QoT drop function.

An aspect of the present. disclosure relates to a computer system Comprising a digital processor, and a network interface configured to be in communication with a plurality of nodes of an optical network to collect information about quality of transmission (QoT) on a plurality of wavelength channels received at one or more nodes of the optical network. The computer system further comprises a memory device coupled to the digital processor and comprising instructions executable by the processor. When executed by the digital processor, the instructions cause the digital processor to detect coincident drops in QoT on the plurality of wavelength channels, to determine a QoT drop function based on the detected coincident drops in QoT, and to detect a signature of a network event in the QoT drop function. The QoT drop function indicates for each, or at least some, of the plurality of wavelength channels a change in a QoT metric corresponding to a respective drop in QoT among the detected coincident drops in QoT.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1 is a flowchart of a method for monitoring an optical fiber network according to an embodiment;
FIG. 2 is a schematic diagram of a portion of an optical fiber network being monitored according to an embodiment;
FIG. 3 is a graph illustrating a transient drop in quality of transmission (QoT) in an example time series of a QoT metric (ESNR);
FIG. 4 is a block diagram of an example WDM receiver subsystem in a node of an optical fiber network;
FIG. 5 is a block diagram of an example optical receiver (Rx) of the WDM receiver subsystem of FIG. 4;
FIG. 6 is a flowchart of an example method for detecting and analyzing transient QoT drops in an optical fiber network;
FIG. 7 is a graph illustrating an example set of QoT time series for four partially overlapping lightpaths in the optical fiber network of FIG. 2;
FIG. 8 is a graph illustrating an example QoT drop function generated using the method of FIG. 6;
FIG. 9 is a graph illustrating a range of parameters of a QoT drop function corresponding to fiber bending;
FIG. 10 is a flowchart of an example method for detecting a fiber bending event based on a QoT drop function;
FIG. 11 is a schematic block diagram of a network monitoring system according to an embodiment.

### DETAILED DESCRIPTION

In the following description, for purposes of explanation and not limitation, specific details are set forth, such as particular circuits, circuit components, techniques, etc. in order to provide a thorough understanding of the described example embodiments. However, it will be apparent to one skilled in the art that the present disclosure may be practiced in other embodiments, embodiments that may depart from these specific details. In other instances, detailed descriptions of well-known methods, devices, and circuits may be omitted so as not to obscure the description of the exampled embodiments. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Furthermore, the following abbreviations and acronyms may be used in the present document:
"QPSK" Quadrature Phase Shift Keying
"QAM" Quadrature Amplitude Modulation
"8QAM": 8 quadrature amplitude modulation
"WDM": Wavelength Division Multiplexing
"RHS" Right-Hand Side
"AWGN": Additive White Gaussian Noise
"BER': Bit Error Ratio
"ESNR": Electric Signal to Noise Ratio
"EVM": Error Vector Magnitude
"FEC": Forward Error Correction
"LP": Lightpath
"ML": Machine Learning
"OSA": Optical Spectrum Analyzer
"OTDR": Optical Time Domain Reflectometer
"OPM": Optical Power Monitor
"QoT": Quality of Transmission
"RCA": Root Cause Analysis
"TIA": Trans-Impedance Amplifier
"ADC": Analog to Digital Converter

The term "Quality of Transmission", abbreviated as QoT, refers to transmission quality of optical communication signals received at an optical receiver via propagation over an optical fiber link, typically after optical to electrical (O/E) conversion at the optical receiver. Changes in QoT may be estimated based on various QoT metrics that may be available from the optical receiver, such as but not exclusively an error vector magnitude (EVM) or a measure derivable therefrom, or a BER or a measure derivable therefrom, e.g. Q², electrical signal to noise ratio (ESNR), or the like. In at least some of the examples described below, QoT is assessed based on pre-FEC measurements at the optical receiver as such measurements may be more sensitive to changes along a lightpath, although embodiments using post-FEC measurements may also be envisioned. The term "FEC" refers to a process of forward error correction at the optical receiver; "pre-FEC" and "post-FEC" measurements refer to signal measurements performed on the received signal before and after FEC, respectively. The term "lightpath" refers to an all-optical signal path between two nodes of an optical network terminated with an optical receiver at one end thereof and with an optical transmitter at the other end thereof. A lightpath typically has a distinct wavelength channel associated therewith that carries data traffic of the lightpath, and different lightpaths sharing at least one optical fiber link have different wavelength channels associated therewith to facilitate wavelength demultiplexing.

Examples described below relate to an apparatus, system, and method for detecting and analyzing variations in QoT in optical fiber networks that use wavelength division multiplexing (WDM) to transmit information over a plurality of distinct optical transmission channels centered at a plurality of corresponding distinct wavelengths ("wavelength channels"). Some embodiments include analyzing differences in a measure of QoT estimated on a plurality of wavelength channels to identify various network events and processes that may cause QoT deterioration for one or more of corresponding lightpaths.

Some of the examples described below relate to detecting and analyzing temporary drops in QoT, i.e., temporary degradations of transmission performance on a wavelength channel or a plurality of wavelength channels. Such temporary QoT drops may last from a fraction of a second to a few minutes, after which the QoT typically returns to normal. According to an aspect of the present disclosure, a likely root cause of such temporary drops in QoT, such as fiber bending, may be identified by analyzing coincident QoT drops on a plurality of wavelength channels.

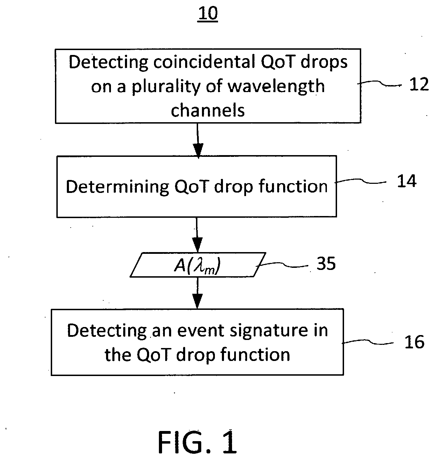

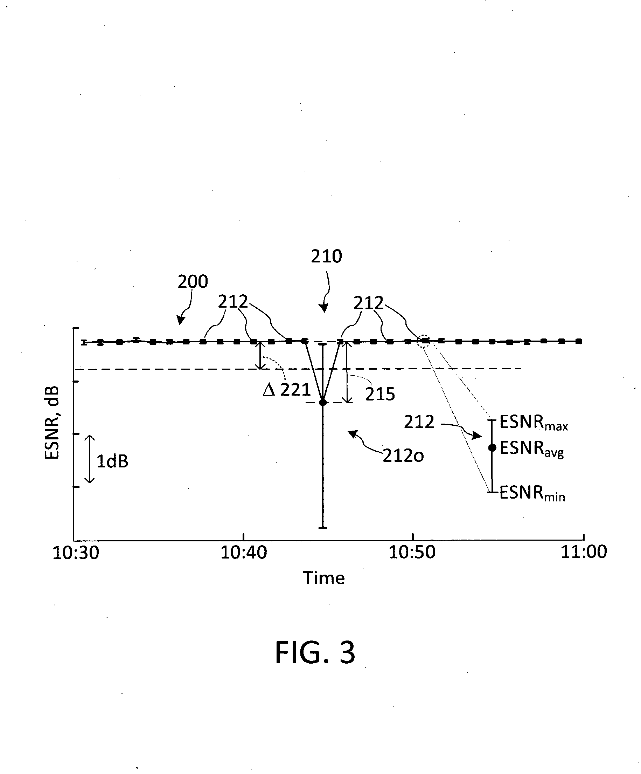

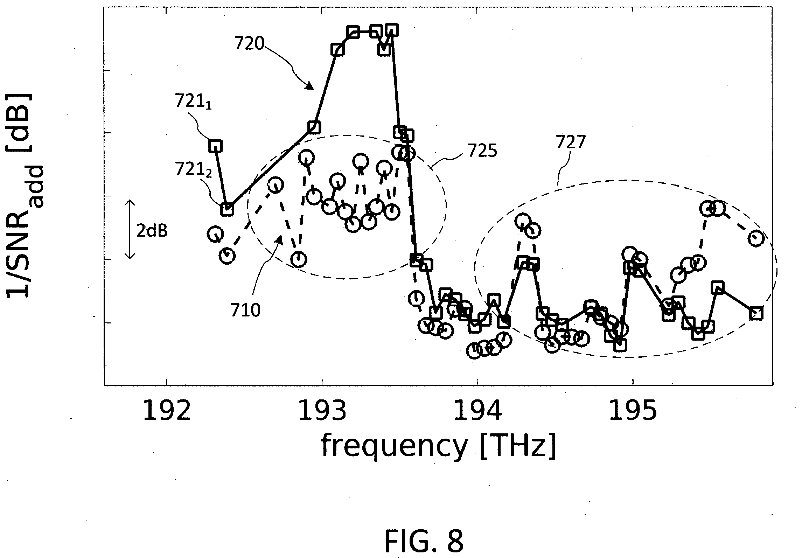

Referring to FIG. 1, some embodiments of the present disclosure provide a method 10 for monitoring an optical network. Method 10 includes step 12 of detecting coincident drops in quality of transmission (QoT) on a plurality of wavelength channels received at one or more nodes of the optical network, step 14 of determining a QoT drop function 35 based on the detected coincident drops in QoT, and step 16 of detecting a signature of a network event in the QoT drop function 35. The QoT drop function 35 indicates for each of at least some of the plurality of wavelength channels a change in a QoT metric corresponding to a respective drop in QoT among the detected coincident drops in QoT. The QoT drop function 35 may be denoted *A*(*fₘ*) or *A*(*λₘ*)*,* where λₘ is a wavelength of an m-th wavelength channel, and *fₘ* is a corresponding optical frequency *fₘ =c*/λ*ₘ,* c being the speed of light. The QoT drop function 35 may also be referred to herein as the QoT distortion spectrum.The change in a QoT metric corresponding to a drop in QoT may be determined, e.g., as a difference between a first value and a second value, the first value being determined based on one or more values of the QoT metric measured before and/or after the drop in QoT, the second value being determined based on one or more values of the QoT metric measured during the drop in QoT, e.g. as described below with reference to FIG. 3. In some implementations, step 16 of detecting a signature of a network event in the QoT drop function 35 may include, e.g., comparing the QoT drop function 35 to one or more functions of wavelength or optical frequency that may be pre-stored or generated in real time according to a computer model or offline experiments. In some implementations, step 16 may include applying a pre-defined test to the QoT drop function 35. In some implementations, step 16 may include detecting the presence or absence of oscillations in the QoT drop function 35. In some implementations, step 16 may include generating a metric based on the QoT drop function 35 and comparing the metric to a threshold. An example of such metric, which is referred to as "bending indicator" (e.g., 730), is described below with reference to FIGs. 8-10.

One or more of the examples described below may include collecting, e.g. at step 12 of method 10 or prior to step 12, QoT data for a plurality of lightpaths active in an optical fiber network, detecting coincident, i.e., approximately simultaneous, temporal drops in a QoT metric on a plurality of optical channels corresponding to a subset of the lightpaths sharing at least a segment of the optical fiber network, and generating the QoT drop function based on magnitudes of changes in the QoT metric coincident with the QoT drops. One or more of the example embodiments may further include identifying a likely cause of the anomalous network event based on a signature detected in the QoT drop function. In some embodiments, detecting the signature may include detecting oscillations in the QoT drop function. Some embodiments may include computing a measure of the oscillations for the QoT drop function. Some embodiments may include applying a threshold condition to the measure of the oscillations. In some embodiments, the detected QoT drops may be classified as being likely related to fiber bending based on the computed measure of oscillations. In some embodiments, the QoT metric may be based on BER measurements at an optical receiver. In some embodiments, the QoT metric may be an inverse metric of QoT ("inverse" meaning that the metric increases if the QoT falls, and vice versa).

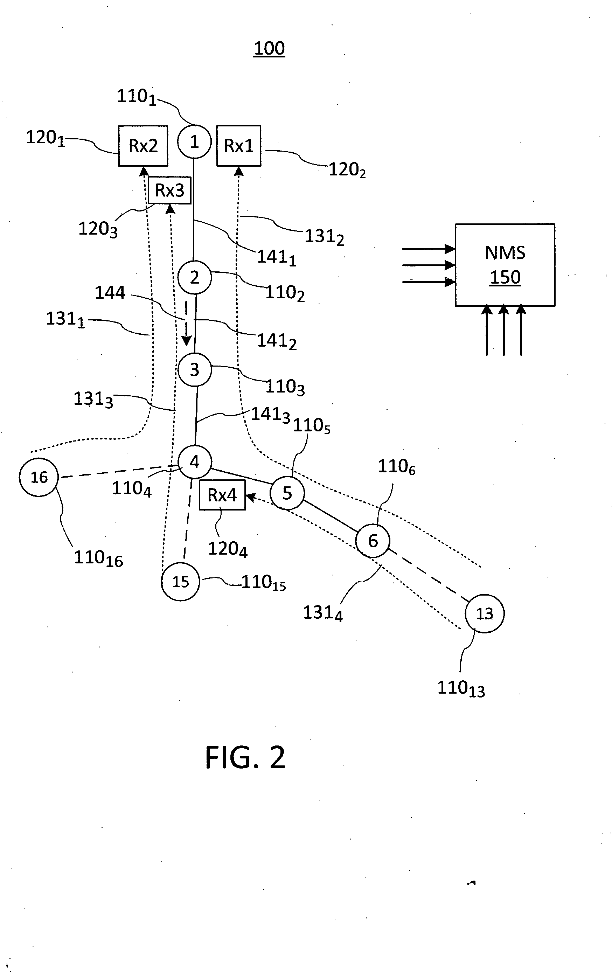

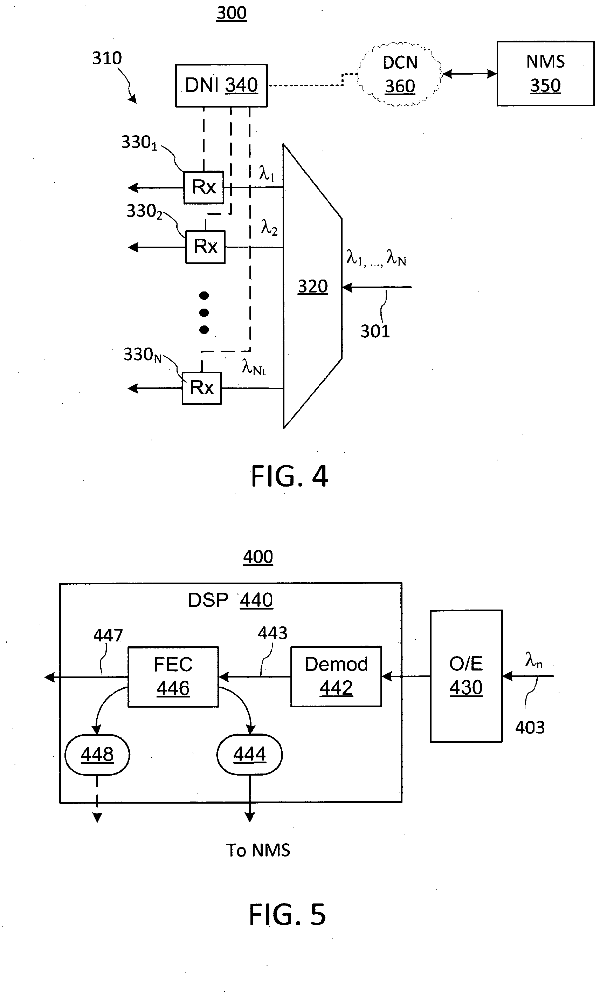

FIG. 2 schematically illustrates a portion of an example optical fiber network 100 including a plurality of network nodes 110₁, ..., 110₆, 110₁₃, 110₁₅, and 110₁₆ (commonly referred to below as "nodes 110ₖ") connected by optical fiber links. The nodes 110ₖ are shown as numbered solid circles, with the integer identifier "*k*" of the node shown within the circle. The network nodes 110ₖ may be configured to communicate with a network monitoring system (NMS) 150, e.g., via a data communication network (DCN) that may be distinct from the optical fiber network 100. The NMS 150 may be implemented using one or more suitably programmed digital computers configured to communicate with the network nodes 110*ₖ*, e.g., over the DCN. The optical fiber network 100 may use WDM to transmit optical signals over a plurality of wavelength channels along a plurality of lightpaths. Each of the network nodes 110ₖ includes one or more optical receivers (Rx), each of the optical receivers being an end point of a lightpath (LP) in the optical fiber network 100, each lightpath being associated with a corresponding wavelength channel, i.e. transmitting optical signals over said wavelength channel. The lightpaths sharing at least a segment of the optical network are associated with distinct, typically non-overlapping, wavelength channels. In the example illustrated in FIG. 1, the optical receivers of the network 100 are represented by three optical receivers 120₁, 120₂, and 120₃ located at node 110₁, and an optical receiver 120₄ located at node 110₄. The optical receiver 120₁ is an end point of a lightpath 131₁ that originates at node 110₁₆ and passes through nodes 110₂, 110₃, 110₄. The optical receiver 120₂ is an end point of a lightpath 131₂ that originates at node 110₁₃ and passes through nodes 110₂, 110₃, 110₄, 110₅, and 110₆. The optical receiver 120₄ is an end point of a lightpath 131₄ that originates at node 110₁₃ and passes through nodes 110₅, 110₆. The optical receiver 120₃ is an end point of a lightpath 131₃ that originates at node 110₁₅ and passes through nodes 110₄, 110₃, and 110₂. An example structure of an optical receiver that may be used in embodiments of the present disclosure is illustrated in FIG. 5 described below.

Each optical receiver 120*ₖ, k* =1, ..., 4, and at least some of the optical receivers of the optical fiber network 100 not shown in FIG. 2, may be configured to measure various performance characteristics for the lightpath it terminates, and a wavelength channel associated with the lightpath, and to output corresponding lightpath performance indicators, such as one or more QoT metrics. The NMS 150 may be configured to collect time records of the one or more QoT metrics and monitor those metrics or records for failure events, including transient failure events (e.g., temporary drops in QoT) that may or may not lead to post-FEC errors at the optical receiver.

FIG. 3 illustrates an example transient performance degradation event 210 ("QoT drop 210") observed in a time series 200 of a QoT metric "ESNR", which stands for "electrical signal to noise ratio". The time series 200 is one example of a time record of a QoT metric that may be monitored by the NMS 150 based on QoT data received from an optical receiver of the network 100, e.g., one of the Rx 120*ₖ*, k =1, ..., 4. The QoT data may be collected from the Rx 120ₖ during normal operation thereof for receiving data traffic in a wavelength channel λ*ₖ* used on the lightpath 131*ₖ.* The time series 200 includes a time sequence of ESNR samples 212, which in the illustrated example are recorded with a one-minute interval. The ESNR samples 212 are indicated in FIG. 2 with error bars, a zoomed-in image of one of these error bars being illustrated in an insert in FIG. 3.

The ESNR samples 212 represent an example of a QoT metric, and may be estimated based, e.g., on a BER evaluated at the optical receiver, e.g., in accordance with equation (1) $ESNR = 10 {log}_{10} \left\{2⋅c⋅{\left[erfcinv\left(b⋅BER\right)\right]}^{2}\right\}$ where "BER" is the pre-FEC BER, erfcinv(x) is the inverse complementary error function defined as erfcinv(erfc(x)) = x, and *b,* c are modulation dependent constants; for example, for QPSK modulation *b* = 2 and c = 1, for 8-quadrature amplitude modulation (8QAM) *b* = 24/11, c = 5/2.

The solid line connecting the ESNR samples 212 in FIG. 3 indicates an average ESNR for each ESNR sample 212, ESNR_{avg}, computed by averaging the pre-FEC BER over a BER measurement interval *T*ₐᵥ, about one minute in this example. The error bars at each ESNR time sample indicate corresponding ESNR ranges from a minimum ESNR, ESNRₘᵢₙ, to a maximum ESNR, ESNRₘₐₓ. The ESNRₘᵢₙ and ESNRₘₐₓ are estimated based on the maximum and minimum BER values, respectively, detected during the BER measurement interval *T*ₐᵥ. In some embodiments, the ESNR samples 212 may include triplets [ESNRₘₐₓ, ESNR_{avg}, ESNRₘᵢₙ] of the maximum, average, and minimum ESNR values at corresponding time samples. In some embodiments, the ESNR samples 212 may include one or two of these values, e.g., ESNR_{avg} and/or ESNRₘᵢₙ. Apart from the QoT drop 210 at a time sample of approximately 10:45, the time series 200 shows little variation around a median ESNR value ESNRₙ of about 13.8 dB

The time series 200 comprises an outlier ESNR sample 212o at approximately 10:45, at which time the ESNR falls significantly below a median ESNRₙ indicating the QoT drop 210. The median ESNR value ESNRₙ may be, e.g., a median value of the ESNR_{avg} or ESNRₘᵢₙ estimated based on a number of ESNR samples before and/or after the QoT drop 210. In the illustrated example, an average ESNR value for the outlier ESNR sample 212o, ESNRₐ, is about 1.5 dB lower than the median ESNR, ESNRₙ, before and/or after the QoT drop 210, with the ESNRₘᵢₙ being more than 3 dB lower than the ESNRₙ. In some embodiments, step 12 of method 10 may include detecting a threshold-crossing change 215 in the QoT metric "ESNR" for the first lightpath. The change 215 in QoT metric "ESNR" corresponding to the QoT drop 210 may be estimated as, e.g., a difference between the median ESNR value, ESNRₙ ("first ESNR value") and an "abnormal" ESNR value ESNRₐ during the QoT drop 210 ("second ESNR value"). The abnormal ESNR value ESNRₐ may be, e.g., the ESNR_{avg} or the ESNRₘᵢₙ determined for the outlier sample 212o. When the QoT drop 210 includes more than one outlier sample 210o, the abnormal ESNR value ESNRₐ may be determined, e.g., as a median or average of the ESNR measurements during the QoT drop 210, or as a minimum ESNR, ESNRₘᵢₙ, measured during the QoT drop 210.

In some embodiments, if the outlier ESNR sample 212o is found to deviate from, e.g., the median ESNR by more than a pre-defined threshold QoT drop Δ 221, an "anomalous QoT" alarm may be raised by the NMS 150 or the optical receiver of the corresponding lightpath. In some embodiments, the threshold Δ QoT drop 221 may be set, e.g., accounting for uncertainty in receiver measurements used to estimate the ESNR, e.g. an uncertainty in the BER measurements at the optical receiver. By way of example, the threshold QoT drop Δ 221 may be set as a scaled median absolute deviation (MAD) of the ESNR, e.g., according to equation (2) $Δ = K ⋅ median \left(\left|{ESNR}_{i}-{ESNR}_{n}\right|\right) ,$ where *K* is some multiplier, and ESNRₙ = median(ESNR), *i* is a sample index, and the medians are computed over some number W of the ESNR*ᵢ* samples outside of the QoT drop 210. By way of example, *W*=11 may correspond to averaging over a 10 min interval. The "ESNR*ᵢ*" in equation (2) may stand for "ESNR_{avg}" or "ESNRₘᵢₙ" for i-th ESNR sample 212. The multiplier *K* may be, e.g., in a range from 2 to 6, e.g., *K* = 4. In another example the threshold QoT drop Δ 221 may be a scaled mean absolute deviation of the ESNR. In another example the threshold QoT drop Δ 221 may be a fixed dB value, e.g., 0.2 dB ESNR, or 0.5 dB ESNR, or 1.0 dB ESNR. Other approaches to setting the threshold QoT drop 221 may also be envisioned within the scope of the present disclosure.

FIG. 4 illustrates a receiver subsystem 310 of an optical network node 300. The optical network node 300 may be an example of any of the nodes 110ₖ of the optical fiber network 100 of FIG. 2. The optical network node 300 may be an end point of up to *N* different lightpaths having corresponding different lightpath wavelength λₙ, *n =*1*,* ..., *N, N* ≥1. The lightpath wavelengths λₙ are center wavelengths of distinct wavelength channels used on the lightpaths. In the following the wavelength channels may be referred to according to their center wavelength, e.g., as wavelength channels λₙ. The receiver subsystem 310 includes a wavelength demultiplexer 320 coupled to a plurality of optical receivers 330₁, 330₂, ..., 330_{N}, commonly referred to below as Rx 330ₙ. The wavelength demultiplexer 320 is configured to receive light 301 from an optical fiber link of the optical network, to demultiplex the wavelength channels λₙ comprised in the light 301, and to separately direct light of each of the received wavelength channels λₙ to a corresponding one of the Rx 330*ₙ*. In operation, each active one of the Rx 330ₙ detects data traffic received in one of the wavelengths channels λₙ from a corresponding lightpath. The optical node 300 may further include a data network interface (DNI) 340 for communications with an NMS 350 over a DCN 360. The NMS 350 may be an embodiment of the NMS 150 of FIG. 2. The optical network node 300, e.g., the DNI 340, may be configured to collect QoT information from each of the Rx 330ₙ for transmitting to the NMS 350, e.g., as described below. The number *N* of the Rx 330*ₙ* at the optical network node 300 may vary from 1 to 100 and more.

FIG. 5 illustrates a schematic block diagram of an optical receiver 400 at the end of a lightpath. The optical receiver 400 includes an opto-electric (O/E) converter 430 and a digital signal processor (DSP) 440. The optical receiver 400 may embody any one of the Rx 330ₙ, *n* = 1, ..., *N,* of FIG. 4. An optical signal 403 of a wavelength channel λₙ, *n =* 1, ..., *N,* is coupled into the O/E converter 430 of the optical receiver 400. The O/E converter 430 typically includes one or more photodetectors followed by one or more TIAs and an ADC (not shown). The O/E converter 430 may also include a local optical oscillator and an optical hybrid/mixer(s) in coherent optical embodiments. The O/E converter 430 converts the optical signal 403 into a digital electrical signal that is provided to the DSP 440 of the optical receiver 400. The DSP 440 is configured to implement at least a demodulator 442 and a FEC decoder 446. The demodulator 442 is configured to demodulate the digital signal received from the O/E converter 430 to obtain a pre-FEC data signal 443 comprising a sequence of demodulated symbol values. The FEC decoder 446 performs FEC decoding on the pre-FEC data signal 443 to output a post-FEC data signal 447 typically having at least a reduced number of bit errors. The post-FEC data signal 447 may be a data output of the optical receiver 400.

The FEC decoder 446 may be configured to repeatedly, e.g. every second or at some other pre-set sampling interval, measure pre-FEC and post-FEC signal quality, and to output streams of pre-FEC metrics 444 and post-FEC metrics 448 that are indicative of the pre-FEC and post-FEC signal quality, respectively. A post-FEC failure may be declared when the post-FEC BER or some other post-FEC metric 448 crosses a pre-defined threshold, resulting in a loss of service or unacceptable quality of service (QoS).

The pre-FEC metrics 444 are indicative of the pre-FEC signal quality, which may be more sensitive to various lightpath imperfections and corresponding deterioration of QoT over the lightpath than the post-FEC metrics 448. The pre-FEC metrics 444 may be, e.g. BER values or EVM values for the pre-FEC data signal 443 ("pre-FEC BER"), or metrics indicative of or derivable from the pre-FEC BER or EVM. The pre-FEC metrics 444 may be communicated to the NMS 350, and the NMS 350 may store time records of the pre-FEC metrics 444, or a corresponding time record of a QoT metric derivable from pre-FEC metrics 444, such as e.g., the ESNR described above. In some embodiments, the NMS 350 may be configured to implement optical network monitoring to identify coincident QoT drops that affect several overlapping lightpaths, and to analyze likely root causes of the QoT drops based on, e.g., time series of the pre-FEC metric 444 for the affected lightpaths, or time series of a QoT metric derivable from the pre-FEC metric 444.

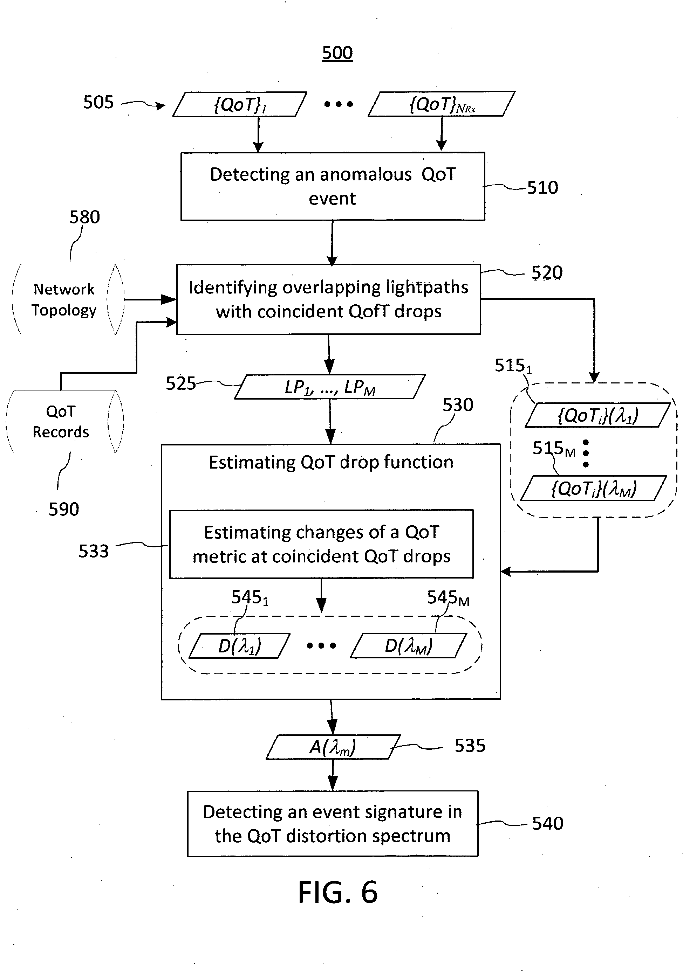

FIG. 6 illustrates method 500 for monitoring an optical fiber network, e.g., the optical network 100. Method 500 may be an example implementation of method 10 described above with reference to FIG. 1. Method 500 may be implemented at least in part by a NMS of the optical fiber network, such as the NMS 150 or the NMS 350, that is configured to collect QoT time records 505 {QoT}ₙ, *n* = 1,..., *N*_{Rx}*,* of a QoT metric for various lightpaths in the optical network and store those records in a record depository; here *N*_{Rx} is a number of optical receivers in the network for which QoT is being monitored. Each of the QoT time records 505 may comprise a time series of a QoT metric, such as the pre-FEC metric 444 of FIG. 5 obtained from a corresponding optical receiver, or metrics derivable from the pre-FEC metric 444. The ESNR described above is one example of such QoT metric.

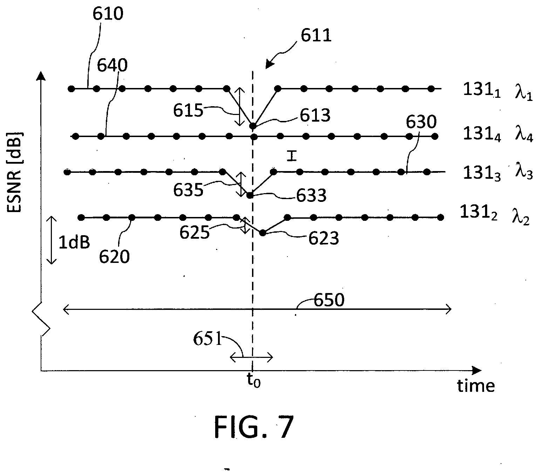

In some embodiments, method 500 may start with step 510 of detecting an anomalous QoT event, e.g., the QoT drop 210 (FIG. 3) or a QoT drop 611 (FIG. 7), for one of the lightpaths of the optical network ("first lightpath"), e.g., the lightpath 131₁ of the optical network 100. In some embodiments, step 510 of detecting the anomalous QoT event may be performed at the network node hosting the optical receiver of the first lightpath, e.g., at the node 110₁ hosting the Rx 120₁. In some embodiments, step 510 may be performed at the NMS of the optical network, e.g., by analyzing streams of the pre-FEC metric 444 received from the optical receivers in real time, or by analyzing the QoT time records 505 of a QoT metric stored at the NMS or at a network records depository accessible by the NMS.

In some embodiments, detecting the anomalous QoT event at step 510 may include detecting a threshold-crossing temporal QoT drop for the first lightpath, e.g., as described above with reference to FIG. 3 and the time series 200 of ESNR samples 212. This may include, e.g., detecting an outlier QoT sample (e.g., 212o, FIG. 3) in a time series of a QoT metric for the first lightpath, and determining whether the outlier QoT sample deviates by more than a pre-defined threshold (e.g., Δ 221, FIG. 3) from a "normal", e.g., median or average, value of the QoT metric that may be estimated over some time interval prior to and/or after the outlier.

Upon detecting the anomalous QoT event for the first lightpath, method 500 may proceed to step 520 of identifying a subset 525 of at least *M*≥3 overlapping lightpaths LP₁, ..., LP_{M}, which all share a same common segment of the optical network with the first lightpath, and which also exhibit temporal QoT drops coincident with the anomalous QoT event detected for the first lightpath. In an embodiment step 520 may include accessing a network topology database 580 to identify a set of lightpaths overlapping the first lightpath, i.e. sharing a common segment of the network with the first light paths. The NMS may further access a database 590 of time-stamped QoT records to identify a subset 525 of *M*≥3 overlapping lightpaths LP₁, ..., LP*_{M}* (*"*LP*ₘ*") exhibiting coincident QoT drops, and a corresponding subset of *M*≥3 QoT time series {QoT*ᵢ*}(λ₁) 515₁, ..., {QoT*ᵢ*}(λ_{M}) 515_{M} including the coincident QoT drops. Here, the notation {QoT*ᵢ*}(λₘ) represents a time series of a QoT metric obtained for a wavelength channel λₘ on a lightpath LP*ₘ*, *m* = 1, ..., *M*, with "QoT*ᵢ*" representing an i-th sample of the time series of the QoT metric. The identification of the subset of overlapping lightpaths that exhibit coincident QoT drops may enable localizing a likely source of the anomalous QoT event to the segment of the optical network that is common to the subset.

Once the subset 525 of overlapping lightpaths with coincident QoT drops is identified, method 500 may proceed to step 530 of estimating a QoT drop function 535 A(λₘ), followed by step 540 of analyzing the QoT drop function 535 to detect a signature of a network event that may be causally related to the anomalous QoT event. In some embodiments, step 530 includes step 533 of estimating, for each of the QoT time series 515*ₘ, m* = 1, ..., *M,* a magnitude of change 545*ₘ D*ₘ *= D*(*λ*ₘ) of the QoT metric "QoT*ᵢ*" at the time of the QoT drop detected for the QoT time series 515*ₘ*. In some embodiments, the QoT metric "QoT*ᵢ*" may be an inverse function of QoT, so that a QoT drop corresponds to an increase in the QoT metric. The QoT drop function 535 may be generated based on the magnitudes *D*ₘ 545*ₘ* and the corresponding channel wavelength λₘ or optical frequencies *fₘ*=*c*/λₘ*.* The QoT drop function 535 may also be referred to as the QoT distortion spectrum.

In some embodiments, detecting an event signature at step 540 may comprise detecting oscillations or ripples in the estimated QoT drop function 535. In some embodiments, detecting such signature may comprise deciding on a likely cause of the signal degradation based on the detected oscillations or ripples in the estimated QoT drop function 535. In some embodiments, detecting such signature may comprise computing a measure of the oscillations or ripples in the estimated QoT drop function 535. In some embodiments, detecting such signature may further comprise comparing the measure of the oscillations or ripples in the estimated QoT drop function 535 to a threshold.

An example operation of method 500 for the optical fiber network 100 and the NMS 150 will now be described with reference to FIGs. 2, 6, and 7. The NMS 150 may be configured to monitor, analyze, and store QoT information for various lightpaths in the optical fiber network 100, including the lightpaths 131₁ - 131₄. The QoT information may include, e.g., time series of a QoT metric ("QoT time series") that may be obtained, e.g., based on pre-FEC data received from the optical receivers at the ends of the corresponding lightpaths, such as the optical receivers 120₁ - 120₄. The QoT information may further include information identifying the optical receiver from which the QoT time series is sourced, and the corresponding wavelength channels λₙ.

FIG. 7 illustrates example QoT time series 610, 620, 630, and 640 for the lightpaths 131₁, 131₂, 131₃, and 131₄ that may be analyzed by the NMS 150. In the illustrated example, each of the QoT time series 610, 620, 630, and 640 comprises a time sequence of ESNR samples, measured in dB, as described above with reference to FIG. 3. Consecutive ESNR samples are shown in FIG. 7 with solid black circles indicating an ESNR value "ESNRᵢ" computed for a corresponding time sample *tᵢ* based on a pre-FEC BER measured at a corresponding optical receiver. It will be appreciated that the ESNR is one example of a QoT metric that is derivable from and indicative of the pre-FEC BER at an optical receiver; other QoT measures may also be used to generate the QoT time series 610, 620, 630, and 640, including but not limited to a signal quality metric conventionally denoted as Q, Q², or dBQ, and/or EVM. The QoT time series 610, 620, 630, and 640, which are an example of the set of QoT time records 505, may be stored at a network data depository comprised in, or accessible by, the NMS 150.

In an example scenario, at step 510 of method 500 the NMS 150 (or the Rx 120₁) may detect an anomalous QoT deterioration event (QoT drop) 611 for the first lightpath 131₁ at a time instance *t*₀. This may include detecting an outlier sample 613 satisfying a threshold condition, e.g. as described above with reference to FIG. 3. The NMS 150 may further identify the optical receiver (Rx 120₁) for which the QoT deterioration event 611 is detected, and the direction of optical signal propagation on the first lightpath 131₁.

Responsive to detecting the QoT deterioration event 611 for the first lightpath 131₁, at step 520 the NMS 150 may identify the lightpaths 131₂, 131₃, and 131₄ as overlapping with the first lightpath 131₁, i.e., sharing at least one common segment of the optical network 100, and may further identify the lightpaths 131₃ and 131₂ as being included in the subset 525 of the overlapping lightpaths having QoT drops coincident with the anomalous QoT deterioration event 611. Step 520 may include the NMS 150 accessing a network data depository 590 for records of time-stamped QoT information to obtain the QoT time series 620, 630, 640 for a time interval 650 comprising the time stamp *t*₀. Timestamps of the QoT time series for different lightpaths may not be perfectly synchronized, and identifying coincident QoT drops in the QoT time series of different lightpaths may include determining whether the QoT time series include QoT drops with times stamps within a same interval ΔT 651 about the time sample t₀ of the anomalous QoT event 611. The interval ΔT 651 may depend on an interval between consecutive QoT samples and/or a measurement averaging time for each QoT sample. By way of example, the time interval ΔT 651 may be in a range from about 10 milliseconds (ms) to 15 minutes or more. In some embodiments, the interval ΔT 651 may be in a range from a fraction of a second to 3 minutes, e.g., about 1 minute.

In one embodiment, identifying the subset 525 of overlapping lightpaths may include determining which of the QoT time series 620, 630, 640 obtained for the overlapping lightpaths 131₂, 131₃, 131₄ include outlier samples, e.g., 633 and 623, within the time interval 651. A QoT sample may be identified as an outlier if its value significantly or noticeably deviates from a typical QoT value of the time series, e.g., if the deviation exceeds a threshold. A typical QoT value may be defined as a mean or an average value of some number of QoT samples excluding the outlier(s). In one embodiment, the identification of lightpaths with coincident QoT drops may include estimating cross-correlation between the QoT time series 610 for the first lightpath 131₁ and each one of the QoT timeseries for the set of overlapping light paths, e.g. the QoT time series 620, 630, and 640 for the overlapping lightpaths 131₂, 131₃, 131₄.

In the example of FIG. 7, the NMS 150 may detect the presence of an outlier sample 633 in the QoT time series 630 for the lightpath 131₃, and the presence of an outlier sample 623 in the QoT time series 620 for the lightpath 131₂, the outlier samples 623 and 633 being coincident with an outlier sample 613 indicating the QoT degradation event 611. The NMS 150 may also detect the absence of an outlier sample in the QoT time series 640 for the lightpath 131₄ that would be coincident with the detected QoT event 611, i.e., coincident with the outlier 613 in the QoT time series 610. Accordingly, the NMS 150 may determine that a likely location of a network event causing the outliers samples 613, 623, and 633 is within a segment of the optical fiber network 100 from the node 110₄ to the node 110₁. Refining the localization to a particular optical fiber span, e.g., an optical fiber span 141₁ connecting nodes 110₁ and 110₂, or an optical fiber span 141₂ connecting nodes 110₂ and 110₃, or an optical fiber span 141₃ connecting nodes 110₃ and 110₄, may be facilitated in embodiments wherein optical power at the inputs and/or outputs of optical amplifiers along the lightpaths are monitored, and monitored time series of optical power are provided to the NMS 150. The NMS 150 may use said time series to estimate changes in optical loss of corresponding fiber spans, and/or to determine which of the optical fiber spans is first (i.e., counting in the direction of light propagation for the lightpaths) to exhibit an optical power drop approximately coincident the detected QoT drop(s).

By way of example, the NMS 150 may analyze time series P₃(t), P₂(t), and P₁(t) of optical power received at nodes 110₃, 110₂, and 110₁, respectively, in the propagation direction of the lightpaths 131₃, 131₂, and 131₁ exhibiting the QoT drops. The NMS 150 may analyze each of these power time series in some time window about the time t₀. The NMS 150 may detect a drop in a power time series P₂(t) (node 110₂) at a time *t*₂ ≅ t₀ and detect no corresponding power drop in the time series P₃(t) (node 110₃). The NMS 150 may then identify the network event that have caused the QoT drop at node 110₁ as locating between the nodes 110₂ and 110₃.

In some embodiments, network event localization may be augmented by analyzing the evolution of the optical power of light propagating between the network nodes in the propagation direction 144 opposite to that of the lightpaths 131₁ -131₃ with the detected QoT drop(s), e.g., in the direction from node 110₁ to node 110₂, and from node 110₂ to node 110₃. By way of example, detecting an optical power drop at the time t₀ in the propagation direction 144 at node 110₃ in the absence of a corresponding power drop being detected in the propagation direction 144 at node 110₂ may confirm the location of the network event between nodes 110₂ and 110₃.

Detecting coincident optical power drops for both propagation directions is not a requirement for event localization. Some events causing a QoT drop for one or more lightpaths may not be bi-directional, e.g., a QoT drop may be caused by bending only one of two optical fibers of a dual-fiber patch-cord. Furthermore, in some cases a same event may cause approximately simultaneous power drops for two consecutive optical fiber links in the opposite propagation directions, e.g., when node-connected segments of optical fibers carrying optical signals in both propagation directions are disposed near the node within a same conduit, e.g. a same tube. By way of example, coincident optical power drops detected at node 110₂ in the direction of the lightpaths 131₃, 131₂, and 131₁ and at node 110₄ in the propagation direction 144 may indicate a same fiber bending event at or near node 110₃.

At step 530 of method 500, the NMS 150 may estimate a QoT drop function 535, e.g. as a function A(λₘ) of the lightpath wavelength λₘ or, equivalently, as a function A(*f*ₘ) of the corresponding channel frequency *f*ₘ = c/λₘ. In some embodiments, the NMS 150 may estimate the QoT drop function 535 based at least in part on magnitudes, e.g., 615, 625, and 635, of a change in the QoT metric for the outlier samples, e.g., 613, 623, and 633, and the channel wavelengths, e.g., λ₁, λ₂, and λ₃, of the corresponding lightpaths 631₁, 631₂, and 631₄. The magnitudes 615, 625, and 635 are examples of the magnitudes Dₘ(λₘ) 645ₘ of a change of a QoT metric described above with reference to FIG. 6.

In one example embodiment, the NMS 150 may generate the QoT drop function 535 based on changes in the ESNR at the time of the QoT drops as a function of the wavelength λₘ or an optical frequency *f*ₘ, e.g., in accordance with equation (3): $A \left({λ}_{m}\right) = {A}_{0} ⋅ D \left({λ}_{m}\right) .$ Here *A*₀ is a scaling factor and *D*(λ*ₘ*), *m =* 1, 2, 3 are the magnitudes 615, 625, and 635 of the deviations of the outlier samples 613, 623, and 633, respectively, from the typical ESNR levels of the corresponding QoT time series 610, 620, and 630, respectively, indicated in FIG. 7 by the solid lines. The *D*(*λₘ*) may be estimated, e.g., as $D \left({λ}_{m}\right) = \left[{ESNR}_{n}\left({λ}_{m}\right)-{ESNR}_{a}\left({λ}_{m}\right)\right] ,$ where ESNR*ₐ* is an ESNR value of the corresponding outlier, e.g., 613, 623, or 633, and the ESNRₙ is a "normal" or typical ESNR value for the lightpath, e.g. as indicated by the solid lines in FIG. 7. The ESNRₙ ("first ESNR value") may be estimated, e.g., as a median ESNR value or an average ESNR value for a number of ESNR samples preceding and/or following the outlier. In some implementations, the ESNR values in the RHS of equation (4) may be linear, non-dB values of the ESNR. In some implementations, the ESNR values in the RHS of equation (4) may be in dB.

In some embodiments, the QoT drop function 535 may be estimated based on an inverse metric of QoT, i.e. a QoT metric which value increases when QoT drops. In one embodiment, the processing at step 530 may include, e.g., a step of estimating a signal-normalized amount of added noise, (ESNR_{add})⁻¹, that would result in the detected drop of the ESNR, e.g., in accordance with an equation $\frac{1}{{ESNR}_{add}} = \frac{1}{{ESNR}_{a} \left({λ}_{m}\right)} - \frac{1}{{ESNR}_{n} \left({λ}_{m}\right)} ,$ The signal-normalized amount of added noise, (ESNR_{add})⁻¹, is one example of a measure (magnitude) of change in a QoT metric that may be used in embodiments of the present disclosure to obtain the QoT drop function 35 (FIG. 1) or 535 (FIG. 6). In one embodiment, the QoT drop function 535 may be computed based on the values of the added signal-normalized noise 1/ESNR_{add} for the corresponding wavelength channels, e.g. based on equation (3) with D(λ*ₘ*) = (ESNR_{add}(λ*ₘ*))⁻¹.

FIG. 8 illustrates example spectra 710 (circles connected by a dashed line) and 720 (squares connected by a solid line) of the signal-normalized added noise (ESNR_{add})⁻¹ for an example subset 525 of lightpaths that extend between nodes 110₁ and 110₁₅ in the optical fiber network 100 of FIG. 1 and experience coincident ESNR drops, as function of the channel frequency *f*ₘ = c/λₘ for the respective lightpaths. Note that although FIG. 2 shows only three such lightpaths, in the example of FIG. 8 the number (N, FIG. 4) of optical receivers at each of the nodes 110₁ and 110₁₅, and the number *M* of active lightpaths established between them, is greater than 40. In FIG. 8, the circles and squares in the respective spectra 710 and 720 indicate the added signal-normalized noise values (ESNR_{add}(*f*ₘ))⁻¹ for the two counter-propagation directions, respectively, between the nodes 110₁ and 110₁₅. For example, squares 721₁ and 721₂ represent increases (ESNR_{add}(*f*ₘ))⁻¹ in the signal-normalized noise (ESNR(*f*ₘ))⁻¹ corresponding to the QoT drops detected at node 110₁ for two frequency-adjacent wavelength channels that are simultaneously active during the measurements. Channels at frequencies below/above about 193.5 THz use different modulation formats.

Each of the spectra 710 and 720 may be an example of the QoT drop function 35 or 535. Noticeable features of the spectra 710 and 720 include the strong frequency dependence in general of the added signal-normalized noise (ESNR_{add}(*f*ₘ))⁻¹, with an overall range of about 12dB, and the presence of ripples or oscillations as a function of frequency. E.g., the spectrum 710 exhibits six oscillations 725, about 2 dB or more peak-to-peak, in the frequency range from about 192.3 THz to about 193.5 THz. Each of the spectra 710, 720 also exhibits at least three clearly visible oscillations 727, 1-4 dB peak to peak, in the frequency range from about 194 THz to about 196 THz.

In an optical network using optical amplifiers to compensate for propagation loss of optical signal power, added noise may be related to added optical loss. One possible cause of optical loss that oscillates with frequency is optical loss caused by optical fiber bending. The oscillations in optical fiber loss due to fiber bending may stem from the presence of a so-called "whispering-gallery mode" along the bent portion of the fiber and interference of those modes with the fundamental mode. The presence, shape, and depth of these oscillations may be leveraged to detect sharp fiber macro-bending events in optical networks using wavelength-dependent variations in quality of transmission sensed at optical receivers.

The presence of ripples, such as the oscillations 725 and 727, in the spectra 710 and 720 may be a signature of fiber bending somewhere in the common network segment of the subset 525 of overlapping lightpaths. In some embodiments, the NMS 150 may be configured to estimate a measure of the ripples or oscillations in the estimated QoT drop function, e.g., 710 or 720, and use the estimated measure to determine whether a likely cause of the QoT drops represented by the spectrum is optical fiber bending.

In some embodiment, the measure of oscillations may be an estimate of an "energy", or strength, of the oscillations in the QoT drop function 535 *A*(*f*)*.* In some embodiments the measure of oscillations, which may be denoted as "BI" ("bending indicator"), may be estimated, e.g., in accordance with equation (6), as $BI = {\int }_{- ∞}^{+ ∞} {\left|{F}^{- 1}\left\{C\left(A\left(f\right)\right)-\left〈C\left(A\left(f\right)\right.\right〉\right\}\right|}^{2} dτ ,$ where {.} is the inverse Fourier transform, (.) denotes average over frequencies, *A(f)* is the QoT drop function, and *C(A(f))* is some monotonic function of the *A(f).* In one example implementation, *C*(*A*(*f*)) may be a linear function of *A*(*f*)*,* i.e. *C*(*A*(*f*)) *~ A*(*f*)*.* In another example implementation, $C \left(A\left(f\right)\right) = \sqrt{A \left(f\right)}$*.* In some embodiments, the bending indicator may be estimated based on dB values of the QoT drop function *A_{db}*(*fₘ*) = 10 log₁₀(A(*fₘ*)), e.g. based on equation (7): $BI = {\sum }_{m = 1}^{M} \left|{F}^{- 1}\left\{C\left({A}_{dB}\left({f}_{m}\right)\right)-\left〈C\left({A}_{dB}\left({f}_{m}\right)\right.\right〉\right\}\right| .$

Other embodiments may use different approaches to estimate the measure BI. For example, in some embodiments the BI may be estimated based on the count of zero-crossings of a derivative of the QoT drop function A(λ), based on the number of peaks in the QoT drop function A(λ) max and mins, etc. In some implementations, the BI may be estimated based on a total variation *V(A)* of the QoT drop function A(f) within a frequency range [*f*₁, *f_{M}*] of the QoT drop function *A(f)*. The *V(A)* may be estimated, e.g., based on a sampled representation of the *A*(*f*)*,* e.g. in accordance with equation (8): $V \left(A\right) = {sup}_{P} {\sum }_{i = 1}^{{n}_{p}} \left|A\left({f}_{i + 1}\right)-A\left({f}_{i}\right)\right| ,$ where sup{·} is the supremum function; sup{·} in the RHS of equation (8) runs over the set 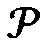 of all partitions P = {*f*₁*, ... , f_{nₚ}*} of the frequency range [*f*₁*, f_{M}*] of the QoT drop function *A(f)* In some embodiments, an inverse measure "BIᵢₙᵥ"of a strength of oscillations in the QoT drop function may be used as a bending indicator. E.g., the BIᵢₙᵥ may be estimated as the inverse of the total variation of the QoT drop function normalized by a range {A(*fₘ*)}ₘₐₓ - {A(*fₘ*)}ₘᵢₙ in which the QoT drop function varies, e.g. as ${BI}_{inv} = \frac{{sup}_{f ∈ \left[{f}_{1}, {f}_{M}\right]} A \left(f\right) - {inf}_{f ∈ \left[{f}_{1}, {f}_{M}\right]} A \left(f\right)}{V \left(A\right)} ,$ where inf{·} is an infimum function. In some implementations, the BIᵢₙᵥ may be estimated as ${BI}_{inv} = \left[{max}_{m = 1 , … , M}{A}_{dB}\left({f}_{m}\right)-{min}_{m = 1 , … , M}{A}_{dB}\left({f}_{m}\right)\right] / {V}_{1} \left(A\right)$ where ${V}_{1} \left(A\right) = {\sum }_{1}^{M} \left|{A}_{dB}\left({f}_{m + 1}\right)-{A}_{dB}\left({f}_{m}\right)\right|$ is an estimate of the total variation *V*(*A*)*.*

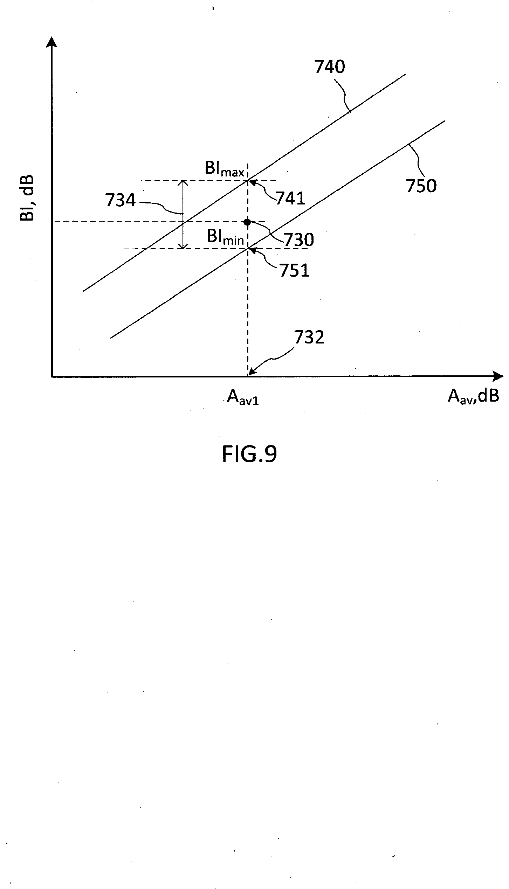

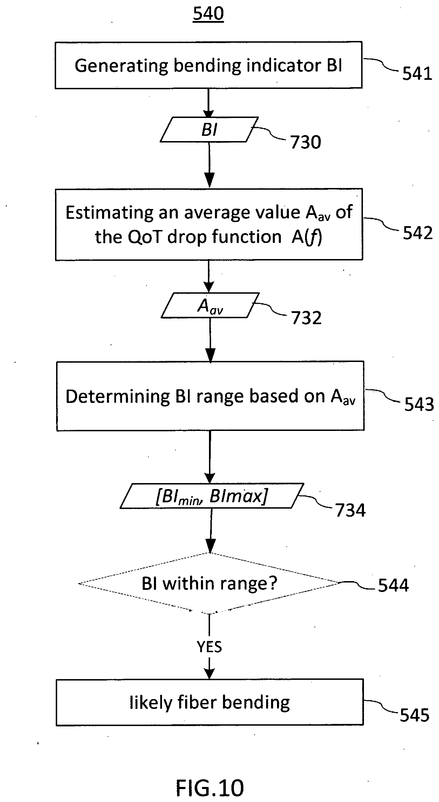

Referring to FIGs. 9 and 10, in some embodiments, the determination (e.g., at step 540 of method 500) whether the coincident QoT drops are likely caused by fiber bending may be based on a rule or condition relating the bending indicator BI to an average Aₐᵥ = 〈*A*(*f*)〉 732 of the QoT drop function *A(f)* 535 over a range of optical frequencies *f.* In some embodiments, step 540 of method 500 may include step 541 (FIG. 10) of generating a bending indicator "BI" 730, e.g. using one of the approaches described above with references to equations (6) to (10) or below with reference to equations (11) and (12), and step 542 of estimating an average value Aₐᵥ₁ 732 of the QoT drop function *A*(*f*)*.* Step 540 may further include step 543 of determining, based on the average value Aₐᵥ₁, a range 734 of the BI values that is indicative of fiber bending being a likely cause of the detected QoT drops, and step 544 of determining whether the bending indicator BI 730 is within the range 734 of the BI values that is indicative of fiber bending, e.g., if BIₘᵢₙ ≤ BI ≤ BIₘₐₓ. At least one of the BIₘᵢₙ and BIₘₐₓ may vary with the Aₐᵥ, typically being greater for greater average values Aₐᵥ of the QoT drop function. In some implementations, the values BIₘᵢₙ and BIₘₐₓ expressed in dB are approximately linear functions of the Aₐᵥ expressed in dB; this is illustrated in FIG. 9 by lines 740 and 750, which schematically represent the functions BIₘₐₓ(Aₐᵥ) and BIₘᵢₙ(Aₐᵥ), respectively. In some implementations the range 734 may be defined by the minimum BI value BIₘᵢₙ(Aₐᵥ) 741, and step 544 may include determining that the bending indicator BI 730 is indicative of fiber bending if the BI 730 is greater than the BIₘᵢₙ 751. In some implementations, the functions BIₘₐₓ(Aₐᵥ) 740 and BIₘᵢₙ(Aₐᵥ) 750 may be non-linear, depending on the Aₐᵥ range and the BI generating algorithm used at step 541. In some implementations, step 541 may include averaging the QoT drop function, e.g., using a moving averaging window, to smooth the QoT drop function *A*(*f*) 535 prior to generating the bending indicator BI 730. In some implementations, the averaging window may be at least equal to a frequency spacing between adjacent wavelength channels on which the QoT drops are detected. By way of example, the averaging window may be in a range from 50 GHz to 5 THz, or in a range from about 100GHz to about 2THz in some typical implementations.

In some embodiments, step 540 of method 500 may include comparing the QoT drop function 535 to a prediction of a fiber bending model. In some of such embodiments, the QoT drop function A(f) may be an estimate Aₗₒₛₛ(*f*) of a spectrum of added optical noise that may have caused the added signal-normalized noise estimates (ESNR_{add}(*f*ₘ))⁻¹ at the optical frequencies *f*ₘ. In some embodiments, the NMS 150 may estimate the spectrum of added loss Aₗₒₛₛ(*f*), e.g., based on equations (11): $\frac{1}{{ESNR}_{add}} = \frac{1}{{ESNR}_{2} ⋅ {SL}_{1} ⋅ {G}_{1}} \left({A}_{loss}\left(f\right)-1\right) .$ From equation (11), the spectrum of added loss Aₗₒₛₛ(*f*) may be approximated as ${A}_{loss} \left(f\right) = \frac{{ESNR}_{2} ⋅ {SL}_{1} ⋅ {G}_{1}}{{ESNR}_{add}} + 1 ,$ where *SL*₁ is the span loss of an optical fiber span where the added optical loss occurs, *Aₗₒₛₛ*(*f*) *>* 1 is the added optical loss at frequency *f*, *G*₁ is the gain of a first optical amplifier at the input of the optical fiber span, and *ESNR*₂ is the SNR of a second optical amplifier following the optical fiber span, i.e. ${ESNR}_{2} = \frac{{G}_{2} {P}_{S , 2}}{{F}_{2} hv \left({G}_{2}-1\right) B}$, where *P*_{*s*,2} is the signal power at the input of the second optical amplifier, *G*₂ and *F*₂ are the gain and noise figure of the second optical amplifier, h is the Plack constant, v = *f* is the optical frequency and *B* is the signal reference bandwidth. Equation (8) does not account for non-linear optical effects that may affect optical signal propagation; in some embodiments, the spectrum of added loss Aₗₒₛₛ(*f*) may be estimated accounting for non-linear propagation effects in the optical fiber, e.g., using known in the art non-linear optical fiber propagation models. The optical fiber span where the added optical loss may have occurred may be estimated, e.g., based on an approach described in a publication by C. Delezoide, P. Ramantanis, and P. Layec, "Streamlined failure localization method and application to network health monitoring," Journal of Lightwave Technology, vol. 41, no. 19, pp. 6119-6125. Refining the localization to the fiber span level may be facilitated in embodiments wherein optical power at the inputs and outputs of optical amplifiers along the lightpaths are monitored, and monitored time series of optical power are provided to the NMS 150, which may use said time series to estimate span losses.

According to eq. (12), the added optical loss *Aₗₒₛₛ* is approximately proportional to the (ESNR_{add})⁻¹. In some embodiments, the NMS 150 may store, e.g. in a look-up table, or be configured to generate, a set of model optical loss functions of frequency or wavelength due to optical fiber bending for a plurality of bending parameters, e.g., bending radius *r*_{bend} and/or bending angle ϕ. The NMS 150 may be further configured to compare the QoT drop function A(f) or a corresponding added loss spectrum Aₗₒₛₛ(*f*) to the model optical spectra to decide whether the detected QoT drop is likely to be caused by fiber bending, and to estimate the bending radius *r*_{bend} and/or bending angle ϕ. In some implementations, the NMS 150 may be configured to calculate the distance, e.g. in terms of L2 norm, of the QoT drop function A(f) or a corresponding added loss spectrum Aₗₒₛₛ(*f*) and the model optical functions of frequency or wavelength.

Advantageously, the method described above may be implemented at a network management and monitoring computer system that is configured to collect and monitor receiver signal quality data, such as pre-FEC BER and/or EVM, and does not require any additional hardware capable of detecting fast transient events or specialized sensor equipment such as OTDRs or OPMs. Another potential advantage, in at least some embodiments, is the use of receiver signal error counting, which intrinsically combines sensitivity to fast transient events with a form of integration and may provide improvement over detection methods based on power monitoring. Furthermore, while transponders usually deliver monitored signal quality data at a relatively relaxed pace, e.g. 1 BER sample per second, QoT sampling rates may typically be increased if a use-case justifies investment to support an increase in data storage and processing speed. Furthermore, the approach described above may help network operators to decide on an action plan upon detection of a soft failure event, to evaluate the degree of urgency, likely cost, personnel availability, etc. For example, the method may detect a fiber-bending event located near a node and happening inside a declared maintenance interval window. Such an event is likely to be caused by a technician fiber mishandling, and may be treated as a normal event which, despite its impact on the network availability, does not necessitate any further action from the network operator. In another example, a single fiber bending event outside a maintenance interval window may raise suspicions of intrusion, e.g., fiber tapping; in this case, the network operator may decide to proactively reroute security-sensitive traffic, and the connection may be tagged as potentially compromised and the involved entities/customers informed. In another example, upon detecting repeated fiber bending events outside a maintenance interval window, the operator may decide to reroute availability-sensitive-traffic proactively, schedule an intervention, proactively replace equipment etc. In yet another example, the presence of oscillations in optical loss in a network segment using Raman amplification may have a direct impact on Raman amplification efficiency, e.g. if the wavelength of the pump is attenuated; monitoring such connections for the appearance of transient wavelength-dependent loss may be beneficial for troubleshooting.

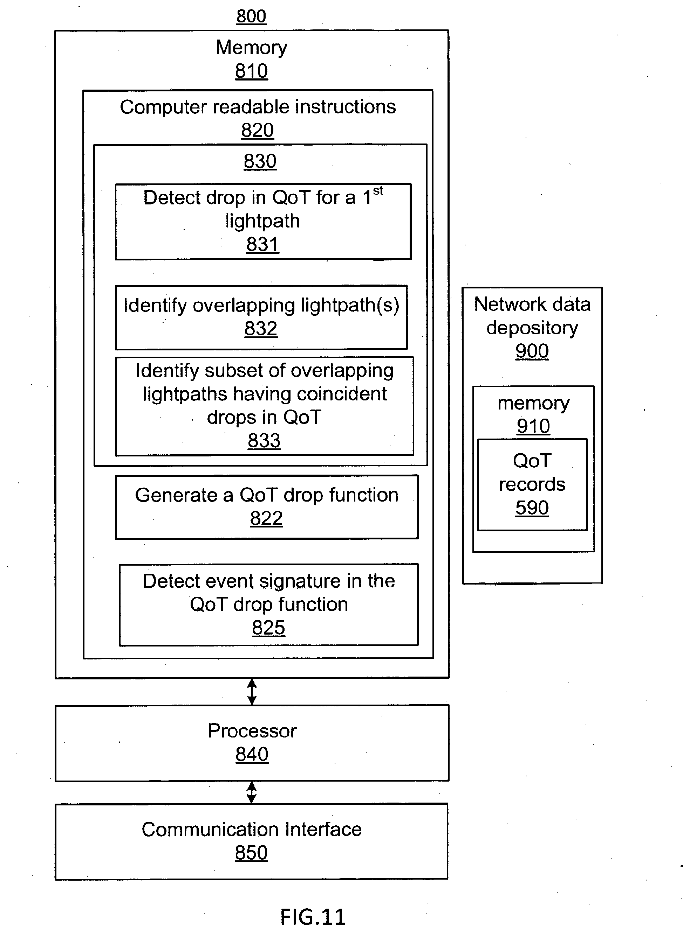

FIG. 11 illustrates an example network monitoring apparatus 800 ("apparatus 800") according to an embodiment of the present disclosure. The apparatus 800 may be an embodiment of the NMS 150 or the NMS 350 described above with reference to FIGs. 2 and 4, respectively. The apparatus 800 is a combination of hardware and software executable by the hardware to perform various embodiments of the network monitoring method described above, e.g. method 10 or 500. The hardware includes a digital processor 840, a communication interface 850, and one or more non-transitory memory devices 810. The communication interface 850 is operable to receive records of QoT metric based on pre-FEC signal quality measures as described above, e.g. over a data communication network from optical receivers of the optical network, e.g.,120₁-120₄ or 330₁, 330₂, ..., 330_{N}, and/or a network data depository 900. The network data depository 900 includes memory 910 storing time-stamped records of QoT metrics, e.g., database 590, collected from the optical receivers. The network data depository 900 may be embodied using a remote computer system, or may be co-located with the apparatus 800, and may share hardware resources thereof. The communication interface 850 may be operable to receive QoT records from the network data depository 900 if the network data depository 900 is implemented remotely. The communication interface 850 may further be operable to receive network topology information for identifying overlapping light paths, e.g. when the network topology information is stored remotely. The one or more memory devices 810 store computer readable instructions 820 which, when executed by the digital processor 840, may cause the digital processor 840 to perform the instructions of the method diagrams illustrated in FIGs. 1, 6, and/or 10. In the example embodiment illustrated in FIG. 11, the instructions 820 include: instructions 830 to execute step 12 of method 10, e.g. including instructions 831 to detect a temporary drop in QoT for a first of a plurality of light paths in an optical fiber network being monitored; instructions 832 to identify a set of lightpaths overlapping with the first light path, and instructions 833 to identity, among the set of overlapping light paths, a subset of second light paths having QoT drops coincident with the 1^{st} lightpath and sharing a common segment of the optical network; instruction 822 to generate a QoT drop function indicating changes in a QoT metric due to the QoT drops versus, e.g., channel optical frequencies or channel wavelengths used on the lightpaths; and, instructions 825 to detect an event signature in the QoT drop function.

Example embodiments described above, e.g. in the summary section and with reference to any one or more of the FIGs. 1 to 11, provide a method for detecting events in an optical network. The method (e.g., 10, FIG. 1; 500, FIG. 6) comprises (e.g., 12, FIG. 1) detecting coincident drops (e.g., 613, 623, 633, FIG. 7) in quality of transmission (QoT) on a plurality of wavelength channels received at one or more nodes (e.g., 110₁-110₅, 110₁₃, 110₁₅, 110₁₆, FIG. 2; 300, FIG. 4) of the optical network (e.g., 100, FIG. 2), and determining (e.g., 12, FIG. 1; 530, FIG. 6) a QoT drop function (e.g., 35, FIG. 1; 535, FIG. 6; 720 or 710, FIG. 8), and detecting a signature (e.g., 730, FIG. 9, 10; 725, 727, FIG. 8) of a network event in the QoT drop function. The QoT drop function indicates for each of the plurality of wavelength channels a change (e.g., 545₁, ..., 545_{M}, FIG. 6; 615, 625, 635, FIG. 7; 721₁, 721₂, FIG. 8) in a QoT metric corresponding to a respective drop in QoT among the detected coincident drops in QoT.

In some implementations, the method may comprise identifying (e.g., 520, FIG. 6) a set (e.g., 525, FIG. 6; 131₁, 131₂, 131₃, FIG. 2) of lightpaths in the optical network sharing a common network segment (e.g., from 110₄ to 110₁, FIG. 2) and exhibiting the coincident drops in the QoT.

In any of the above implementations of the method, detecting the coincident drops in QoT may comprise detecting an outlier (e.g., 210, FIG. 3; 613, FIG. 7) in a time series (e.g., 200, FIG. 3; 610, FIG.7) of samples (e.g., 212, FIG. 3) of a QoT metric (e.g., ESNR) for a first lightpath (e.g., 131₁, FIG. 2), identifying two or more second lightpaths (e.g., 131₂ and 131₃, FIG. 2) sharing a common network segment with the first lightpath and having a coincident outlier (e.g., 623, 633, FIG. 7) in a time series (e.g., 620, 630, FIG.7) of samples of a QoT metric for each of the second lightpaths, the coincident outliers being coincident with the outlier detected for the first lightpath.

In any of the above implementations, the method may comprise estimating a QoT metric for each of the first and second lightpaths based on QoT data (e.g., 444 or 448, FIG. 5) collected from optical receivers (e.g., 120₁, 120₂, and 120₃, FIG. 2; 330₁ to 330_{N}, FIG. 4) of the first and second lightpaths. In any such implementation, the method may comprise obtaining the QoT data based on at least one of bit error rate (BER) or error vector magnitude (EVM) measurements at the optical receivers. In any such implementation, the measurements may be performed prior to forward error correction (FEC). In any of the above implementations, the QoT metric may be an inverse function of QoT.

In any of the above implementations, determining the QoT drop function may comprise estimating an increase in signal-normalized noise (e.g., 721₁ or 721₂, FIG. 8) corresponding to one of the coincident temporary drops (e.g., 611, FIG. 7) in QoT.

In any of the above implementations, detecting the signature of a network event may comprise detecting oscillations (e.g., 725, 727 in FIG. 8) in the QoT drop function (e.g., 720, 710, FIG. 8). Some of such implementations may comprise attributing the network event to fiber bending if the oscillations satisfy a pre-defined criterion (e.g., 544, FIG. 10). Some of such implementations may comprise estimating a strength of the oscillations (e.g., 541, FIG. 10) to generate a bending indicator (e.g., 730, FIGs. 9, 10); estimating (e.g., 542, FIG. 10) an average value (e.g., 732, FIGs. 9, 10) of the QoT drop function; determining (e.g., 543, FIG. 10) a range of values (e.g., 734, FIGs. 9, 10) for the banding indicator based on the average value of the QoT function; and attributing (e.g., 545, FIG. 10) the network event to fiber bending if the estimated bending indicator is within the range (e.g., 544, FIG. 10).

Any of the above implementations of the method may comprise estimating a location of the network event based on optical power measurements collected from two or more consecutive network nodes (e.g., 110₁, 110₂, 110₃, 110₄, FIG. 2) in an optical path of the plurality of optical channels exhibiting the coincident drops in QoT.

Example embodiments described above, e.g. in the summary section and with reference to any one or more of the FIGs. 1 to 11, provide a computer system (e.g., 150, FIG. 2; 350, FIG. 4; 800, FIG. 11). The computer system comprises a digital processor (e.g., 840, FIG. 11), a network interface (e.g., 850, FIG. 11) configured to be in communication with a plurality of nodes (e.g., 110₁-110₅, 110₁₃, 110₁₅, 110₁₆, FIG. 2; 300, FIG. 4) of an optical network (e.g., 100, FIG. 2) to collect information about quality of transmission (QoT) on a plurality of wavelength channels received at one or more nodes of the optical network. The computer system further comprises a memory device (e.g., 810, FIG. 11) coupled to the digital processor and comprising instructions (e.g., 820, FIG. 11) which, when executed by the digital processor, cause the digital processor to detect coincident drops in QoT (e.g., 613, 623, 633, FIG. 7) on a plurality of wavelength channels received at one or more nodes of the optical network (e.g., 830, FIG. 11), to determine a QoT drop function (e.g., 35, FIG. 1; 535, FIG. 6; 720 or 710, FIG. 8) based on the detected coincident drops in QoT, and to detect a signature (e.g., 725, 727, FIG. 8; 730, FIG. 9, 10) of a network event in the QoT drop function (e.g., 825, FIG. 11) based on the detected coincident drops in QoT. The QoT drop function indicates for each of the plurality of wavelength channels a change (e.g., 545₁, ..., 545_{M}, FIG. 6; 615, 625, 635, FIG. 7; 721₁, 721₂, FIG. 8) in a QoT metric corresponding to a respective drop in QoT among the detected coincident drops in QoT.

In some implementations of the computer system, the memory device may comprise instructions (e.g., 833, FIG. 11) to identify a set of lightpaths (e.g., 525, FIG. 6; 131₁, 131₂, 131₃, FIG. 2) in the optical network sharing a common network segment (e.g., from 110₄ to 110₁, FIG. 2) and exhibiting the coincident drops in the QoT.

In any of the above implementations of the computer system, the instructions (e.g., 820, FIG. 11) may comprise instructions (e.g., 831, FIG. 11) to detect oscillations (e.g., 725, 727 in FIG. 8) in the QoT drop function, and to attribute the network event to fiber bending if the oscillations satisfy a pre-defined criterion (e.g., 543, 544, and 545, FIG. 10).

In any of the above implementations of the computer system, the instructions for determining the QoT drop function may comprise instructions for estimating increases (e.g., 721₁, 721₂, FIG. 8) in an inverse QoT metric (e.g., ESNR⁻¹) corresponding to the coincident drops in QoT.

The example embodiments described above are not intended to be limiting, and many variations will become apparent to a skilled reader having the benefit of the present disclosure. For example, some embodiments may use pre-FEC and/or post-FEC QoT metrics other than the ESNR, including but not limited to the EVM and metrics derived therefrom, or the BER itself or a BER-derived metrics such as signal quality parameter commonly referred to as Q, Q2, or dBQ. Some embodiments may use QoT metrics that are not based on error measurements at an optical receiver, to complement or, in some instances, in place of the pre-FEC or post-FEC bit or symbol error measures such as the BER, including but not limited to metrics related to the EVM, polarization mode dispersion (PMD), optical power, OSNR, and the like.

Furthermore, network events, features, and processes other than fiber bending that cause wavelength-dependent QoT deterioration may be detected using the method of the present disclosure, e.g., based on a signature of such event(s) in a QoT drop function. Such events and processes include, but are not limited to, excess cross channel interference (XCI) and/or spectral hole burning in the gain of optical amplifiers in the presence of non-flat distribution of active WDM channels, both of which may be detected using the method of the present disclosure, e.g., by analyzing signatures thereof in the wavelength dependence of the QoT drop function. Other non-limiting examples of network events and processes that may be detected using the method of the present disclosure based on a signature in a QoT drop function include a tilt in optical amplification due to stimulated Raman scattering, e.g., as described by S. Bigo, S. Gauchard, A. Bertaina, and J.-P. Hamaide, "Experimental investigation of stimulated Raman scattering limitation on WDM transmission over various types of fiber infrastructures," IEEE Photonics Technology Letters, vol. 11, no. 6, pp. 671-673, 1999, doi: 10.1109/68.766780, and an accidental change of a mode of operation of an optical amplifier, e.g. an increase in the set tilt of the optical gain of an optical amplifier in a common portion of the lightpaths, which could lead to a linear tilt of the equivalent loss spectrum and a corresponding tilt in a QoT drop function.

Furthermore, in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description with unnecessary detail. Thus, for example, it will be appreciated by those skilled in the art that block diagrams herein can represent conceptual views of illustrative circuitry embodying the principles of the technology. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future.

Furthermore, any mathematical concepts (such as functions, values, sets, sequences) mentioned in this disclosure may be represented or approximated using digital or analog circuitry, or a combination of digital and analog circuitry. For example, a continuous profile may be approximated by a discrete profile. Inversely, a discrete profile may be approximated by a continuous profile, e.g. by interpolation or smoothing of an original profile, e.g. using polynomials, splines, or sync functions.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

## Claims

1. A method (10) for detecting events in an optical network (100), comprising:
(12) detecting coincident drops (613, 623, 633) in quality of transmission (QoT) on a plurality of wavelength channels received at one or more nodes (110₁-110₅, 110₁₃, 110₁₅, 110₁₆; 300) of the optical network;
(14) determining a QoT drop function (35, 535, 720, 710) based on the detected coincident drops in QoT, the QoT drop function indicating for each of at least some of the plurality of wavelength channels a change (545₁,.., 545_{M}; 721₁, 721₂) in a QoT metric corresponding to a respective drop in QoT among the detected coincident drops in QoT; and
detecting a signature (725, 727, 730) of a network event in the QoT drop function.

2. The method of claim 1 comprising (520) identifying a set (525) of lightpaths (131₁, 131₂, 1313) in the optical network sharing a common network segment (110₄ -110₁) and exhibiting the coincident drops in the QoT.

3. The method of claim 1 or 2 wherein detecting the coincident drops in QoT comprises:
detecting an outlier (613) in a time series (610) of samples of a QoT metric for a first lightpath (131₁),
identifying two or more second lightpaths (131₂ and 131₃) sharing a common network segment with the first lightpath and having a coincident outlier (623, 633) in a time series (620, 630) of samples of a QoT metric for each of the second lightpaths, the coincident outliers being coincident with the outlier detected for the first lightpath.

4. The method of claim 3 comprising estimating the QoT metric for each of the first and second lightpaths based on QoT data (444, 448) collected from optical receivers (120₁, 120₂, 120₃; 330₁ to 330_{N}) of the first and second lightpaths.

5. The method of claim 4 comprising obtaining the QoT data based on at least one of bit error rate (BER) or error vector magnitude measurements at the optical receivers.

6. The method of any one of claims 3 to 5 wherein the QoT metric is an inverse function of QoT.

7. The method of any one of claims 1 to 6 wherein determining the QoT drop function comprises estimating an increase in signal-normalized noise (721₁ or 721₂) corresponding to one of the coincident drops in QoT.

8. The method of any one of claims 1 to 7 wherein detecting the signature of a network event comprises detecting oscillations (725, 727) in the QoT drop function.

9. The method of claim 8 comprising attributing the network event to fiber bending if the oscillations satisfy a pre-defined criterion (544).

10. The method of claim 8 or 9, comprising:
(541) estimating a strength of the oscillations to generate a bending indicator (730);
estimating an average value (732) of the QoT drop function;
determining a range (734) of values for the bending indicator based on the average value of the QoT drop function; and
(545) attributing the network event to fiber bending if the bending indicator is within the range.

11. The method of any one of claims 1 to 10 comprising estimating a location of the network event based on optical power measurements collected from two or more consecutive network nodes (110₁, 110₂, 110₃, 110₄) in an optical path of the plurality of wavelength channels exhibiting the coincident drops in QoT.

12. A computer system (150, 350, 800) comprising:
a digital processor (840);
a network interface (850) configured to be in communication with a plurality of nodes (110₁-110₅, 110₁₃, 110₁₅, 110₁₆; 300) of an optical network (100) to collect information about quality of transmission (QoT) on a plurality of wavelength channels received at one or more nodes of the optical network;
a memory device (810) coupled to the digital processor and comprising instructions (820) which, when executed by the digital processor, cause the digital processor to detect coincident drops (613, 623, 633) in QoT on the plurality of wavelength channels, to determine a QoT drop function (35; 535; 720; 710) based on the detected coincident drops in QoT, the QoT drop function indicating for each of at least some of the plurality of wavelength channels a change in a QoT metric corresponding to a respective drop in QoT among the detected coincident drops in QoT, and to detect a signature (725, 727, 735) of a network event in the QoT drop function.

13. The computer system of claim 12 wherein the memory device comprises instructions (833) to identify a set of lightpaths (525; 131₁, 131₂, 131₃) in the optical network sharing a common network segment (110₄ to 110₁) and exhibiting the coincident drops in the QoT.

14. The computer system of claim 12 or 13 wherein the instructions (820) comprise instructions (831) to detect oscillations (725, 727) in the QoT drop function, and to attribute the network event to fiber bending if the oscillations satisfy a pre-defined criterion (543, 544, 545).

15. The computer system of any one of claims 12 to 14 wherein the instructions for determining the QoT drop function comprises instructions for estimating increases (721₁, 721₂) in an inverse QoT metric corresponding to the coincident drops in QoT.
